Europäisches Patentamt

European Patent Office

Office européen des brevets

(11) Publication number: 0 242 975
A2

(12) **EUROPEAN PATENT APPLICATION**

(21) Application number: 87302247.9

(22) Date of filing: 17.03.87

(51) Int. Cl.⁴: **A01F 15/14** , B65B 11/04

(30) Priority: 22.03.86 GB 8607144
26.11.86 GB 8628270

(43) Date of publication of application:
28.10.87 Bulletin 87/44

(84) Designated Contracting States:
BE DE FR NL SE

(71) Applicant: Vennall, Gerald
Fair View Cottage Quarry Road
Sandford Near Bristol Avon BS19 5RW(GB)

(72) Inventor: Vennall, Gerald
Fair View Cottage Quarry Road
Sandford Near Bristol Avon BS19 5RW(GB)

(74) Representative: Cowan, David Robert et al
WALFORD AND HARDMAN BROWN Trinity
House Hales Street
Coventry CV1 1NP West Midlands(GB)

(54) **Wrapping machine.**

(57) A wrapping machine for bales of crop wraps stretchable film around the bales to seal the bales from atmosphere.

The machine includes a turntable 17 rotatable about a vertical axis, and on the turntable are a pair of rollers 27, 28 rotatable about horizontal axes.

Film dispensing means 12 is located adjacent the turntable to dispense film for wrapping the bales during their rotation about the vertical and horizontal axes.

Film is dispensed at a controlled tension which can be adjusted by a hydraulic pump 37 driven through movement of the film, fluid from the pump passing through an adjustable valve 38.

FIG 1

EP 0 242 975 A2

## WRAPPING MACHINE

This invention relates to wrapping machines and in particular to wrapping machines for wrapping bales, for example, bales of crop materials such as grass for silage.

It has been proposed, as for example in British patent application No. 2159489, to wrap large round bales in a length of stretchable film by means of driven rollers supporting the bale about a generally horizontal axis, the rollers being mounted for rotation about a vertical axis.

It is an object of the invention to provide an improved wrapping machine.

According to the invention a wrapping machine for bales comprises a turntable rotatable about an upright axis, a pair of rollers rotatable about parallel, generally horizontal axes, and dispensing means for dispensing a length of stretchable plastics for wrapping the bales, the bales being locatable for support and rotation on the rollers during dispensing of the plastics length so that the bales rotate about said horizontal and upright axes, the dispensing means including a support for the length of plastics and means for tensioning the length as it is dispensed, the tensioning means including an adjustment device whereby the tension is adjustable.

Preferably the tensioning means is hydraulically-operated and provides hydraulically a resistance to the release of a length of plastics from a roll. In one arrangement the unwinding of the roll drives a hydraulic pump and an adjustable hydraulic valve controls the fluid flow from the pump to control the resistance to release of the length and thereby tension the plastics length as it is wound round the bale.

According to a further feature of the invention the rollers of the pair are set at different levels the rollers being rotatable in the same direction as one another, and the roller towards which the bale is tending to roll being set at a higher level than the other roller to thereby inhibit any tendency for the bale to roll off the rollers during operation.

Further features of the invention will appear from the following description of an embodiment of the invention given by way of example only and with reference to the drawings, in which:-

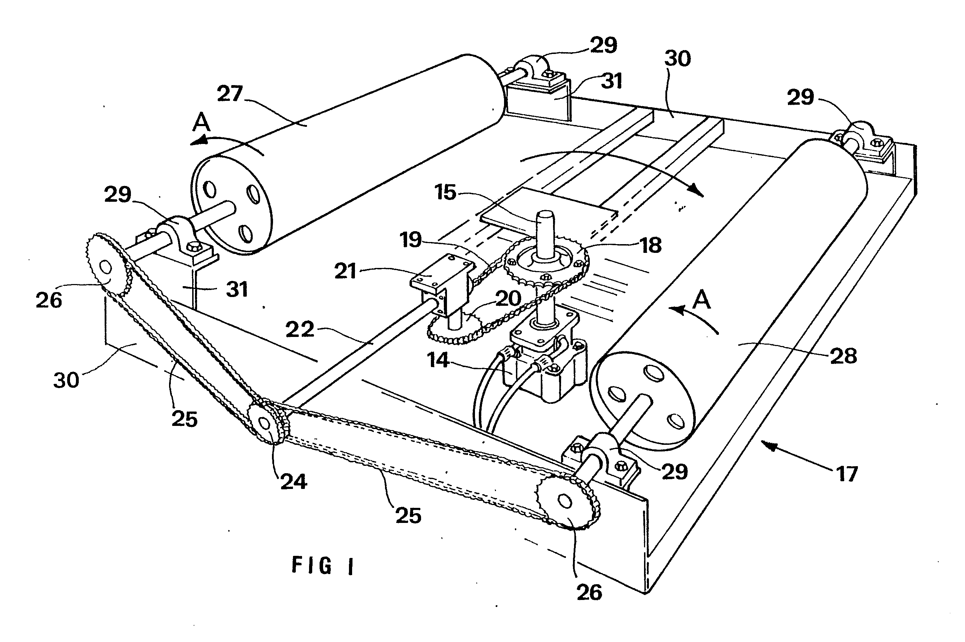

Fig. 1 is a perspective view of a turntable and drive for a bale wrapping machine,

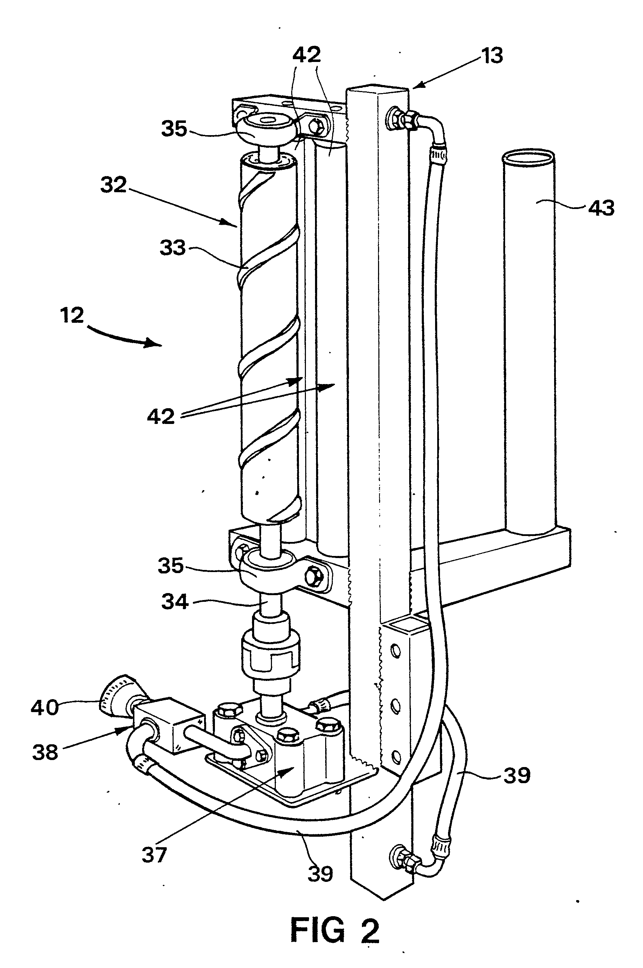

Fig. 2 is a perspective view of a dispenser for plastics film for the wrapping machine, and

Fig. 3 is a side elevation of the bale wrapping machine.

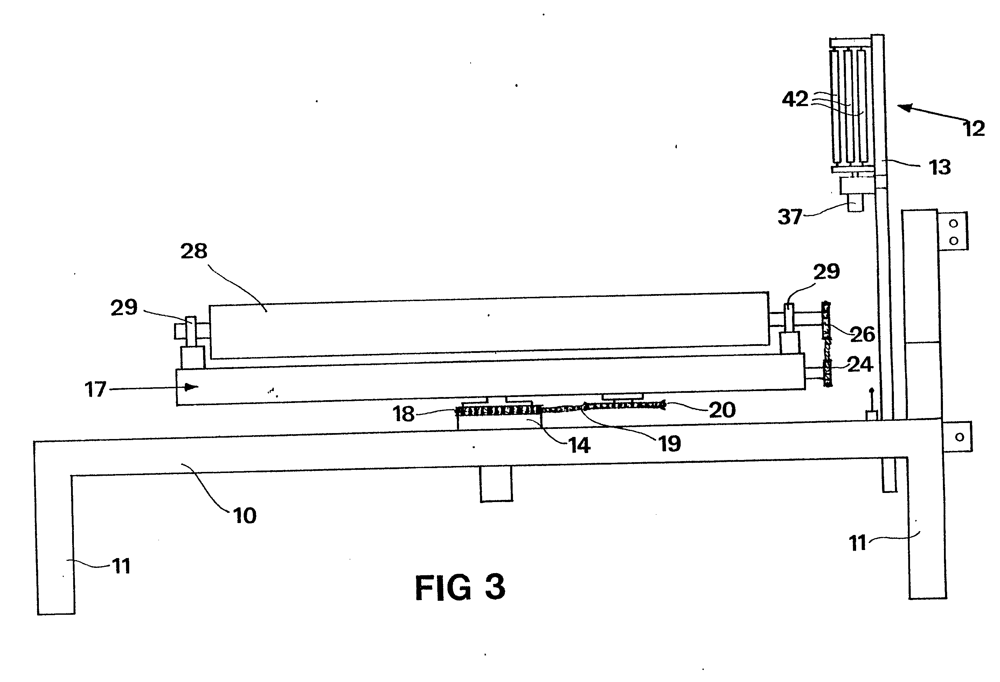

Referring to the drawings a bale wrapping machine includes a frame 10 which, as shown in Fig. 3, is arranged to be supported on the ground but it may instead be mounted on a trailer or like mobile unit. The frame 10 is of generally rectangular structure having ground engaging legs 11 and it also supports stretch film dispensing means 12 on an upright support arm 13.

An hydraulically-operated motor 14 is carried towards the centre of the frame 10 and is fixed thereto. The motor 14 is powered by a source of pressurised fluid, typically the hydraulic supply of a tractor or an independent power pack (not shown).

The motor 14 has an output shaft 15 which drives a turntable 17, rotatably carried on the frame 10, about the axis of the shaft 15 which extends generally vertically. The shaft 15 also carries a chain sprocket 18 around which a chain 19 passes from sprocket 18 to drive a sprocket 20.

The sprocket 20 in turn drives a bevel gearbox 21 from which an output shaft 22 drives a further, double sprocket 24. A chain 25 passes around each of the sprockets 24 to drive a roller sprocket 26, one mounted on the end of a roller 27 and a roller 28.

The rollers 27, 28 are supported on the turntable 17 for rotation about parallel axes in the same direction as one another, as indicated by arrows A. The rollers 27, 28 are each mounted in bearings 29 at opposite ends, the bearings being fixed to turntable frame members 30. However one of the rollers 27 is set at a higher level than the other roller 28 by providing brackets 31 between the frame members 30 and the roller 27 to raise the roller 27 relative to the associated frame member 30. A suitable difference in level is of the order of 5 cms. The rollers 27, 28 are conveniently of a form having a generally cylindrical outer surface with a plurality of dimples distributed over the surface.

The speed of rotation of the turntable 17 is matched to the speed of rotation of the rollers 27, 28 so that the bale (not shown) is wrapped and sealed adequately during continuous rotation of the bale about the vertical and horizontal axes.

Bale wrapping material in the form of a length of stretchable plastics film of the appropriate width is dispensed from a roll of such film (not shown) which is mounted on the dispensing means 12. The roll which has a hollow centre is fitted rotatably on a support 43 which has its axis extending vertically. A roller 32 having a raised spiral 33 about its periphery is mounted on a spindle 34 in bearings 35 carried on support brackets and the spindle 34 drives a hydraulic pump 37 when the roller 32 rotates. The output from the pump 37 passes to an adjustable hydraulic valve 38 and from thence is delivered through hose 39 to a reservoir in the support 13. A further hose 39A feeds fluid to the pump 37 from the reservoir.

Film passing from the roll on the support 43 around the roller 32 rotates the roller 32 and the spindle 34 as the film is unwound and the pump 37 provides a resistance to rotation, the amount of resistance depending on the setting of the valve 38 and this resistance being adjustable by a valve adjustment member 40.

After passing from the roll the film is guided towards the roller 32 by guide rollers 42 which are mounted to be freely rotatable about their axes.

Operation of the wrapping machine is achieved by locating a bale to be wrapped on the rollers 27 and 28 and locating a roll of the film on the support 43. The end of the length of film is drawn out from the film roll and is tied to the bale either to baler twine around the bale or to baler netting around the bale. The tension in the film is checked usually by the operator checking the width of the film passing from the bale to the roll. The bale is rotated about the vertical and horizontal axes by operation of the motor 14. During the rotation the film is overlapped on itself on the bale by about 50% and the rotation continues until the bale is completely envelopped in material whereupon the film length is severed adjacent the dispensing means 12 and is secured to the wrapped bale.

The desired tension in the length of film will be affected by ambient temperatures, the nature of the film used and other factors. If the film is not correctly tensioned a loose or overtight wrapping will be formed with loss of sealing of the material in the bale. The adjustable tensioning arrangement enables different conditions to be provided for in a quick and simple manner.

Instead of the machine having a single turntable two such turntables may be provided side by side so that as a bale is wrapped on one turntable a bale can be loaded and unloaded from the other turntable. In this case one film dispenser can be used for both turntables.

## Claims

1. A wrapping machine for bales which comprises a turntable 17 rotatable about an upright axis, a pair of rollers 27, 28 mounted on the turntable and rotatable about parallel, generally horizontal axes, and dispensing means 12 for dispensing a length of stretchable plastics for wrapping the bales, a bale being locatable for support and rotation on the rollers during dispensing of the plastics length so that the bale rotates about said horizontal and upright axes, the dispensing means including a support 43 for the length of plastics, and means 37, 38 for tensioning the length as it is dispensed, characterised in that the tensioning means includes an adjustment device 38 whereby the tension in the length is adjustable.

2. A wrapping machine according to claim 1 characterised in that the tensioning means 37, 38 is hydraulically operated and provides hydraulically a resistance to the feed of the plastics length from a roll thereof carried on the support 43.

3. A wrapping machine according to claim 2 characterised in that the tensioning means includes a hydraulic pump 37 driven by passage of the length from the roll to the bale and an adjustable hydraulic valve 38 controls the fluid flow from the pump.

4. A wrapping machine according to claim 3 characterised in that the pump 37 is coupled to a roller 32 around which the length passes in extending between the roll and the bale and unwinding of the length from the roll causes the roller to rotate and drive the pump 37.

5. A wrapping machine according to claim 2, 3, or 4 characterised in that the fluid from the tensioning means 37, 38 passes through a closed circuit 13, 39, 39A including a fluid reservoir 13.

6. A wrapping machine according to any one of the preceding claims characterised in that one of the bale supporting rollers 27 is set at a higher level than the other supporting roller 28 of the pair, the higher roller being that towards which the bale is tending to roll during a wrapping operation.

7. A wrapping machine according to any one of the preceding claims characterised by two side by side turntables 17, each for supporting a bale to be wrapped, and a common dispensing means 12 for the turntables.

FIG I

0 242 975

FIG 2

FIG 3

0 242 975